(19) Europäisches Patentamt
European Patent Office
Office européen des brevets

(11) **EP 2 115 737 B1**

(12) **EUROPEAN PATENT SPECIFICATION**

(45) Date of publication and mention
of the grant of the patent:
**01.11.2017   Bulletin 2017/44**

(51) Int Cl.:
**G10L 17/00** (2013.01)

(21) Application number: **07711416.3**

(22) Date of filing: **31.01.2007**

(86) International application number:
**PCT/EP2007/000816**

(87) International publication number:
**WO 2008/092474 (07.08.2008 Gazette 2008/32)**

(54) **METHOD AND SYSTEM TO IMPROVE AUTOMATED EMOTIONAL RECOGNITION**

VERFAHREN UND SYSTEM ZUR VERBESSERUNG DER AUTOMATISIERTEN EMOTIONALEN ERKENNUNG

PROCÉDÉ ET SYSTÈME D'AMÉLIORATION DE LA RECONNAISSANCE D'ÉMOTIONS AUTOMATISÉE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**11.11.2009   Bulletin 2009/46**

(73) Proprietor: **Telecom Italia S.p.A.**
**20123 Milano (IT)**

(72) Inventors:
- **BOLLANO, Gianmario**
  **I-10148 Torino (IT)**
- **ETTORRE, Donato**
  **I-10148 Torino (IT)**
- **ESILIATO, Antonio**
  **I-89052 Campo Calabro (RC) (IT)**

(74) Representative: **Maccalli, Marco**
**Maccalli & Pezzoli S.r.l.**
**Via Settembrini, 40**
**20124 Milano (IT)**

(56) References cited:
**EP-A1- 1 300 831     US-A1- 2003 028 383**

- **GRIM ET AL: "Combining categorical and primitives-based emotion recognition"** PROCEEDINGS OF EUSIPCO 2006, September 2006 (2006-09), XP002438047 Florence, Italy
- **NOAM AMIR ET AL: "Classifying emotions in speech: a comparison of methods"** UROSPEECH 2001, vol. 1, 2001, page 127, XP007004575 Aalborg, Denmark
- **JAMES NOBLE: "Spoken Emotion Recognition with Support Vector Machines"** HONOURS THESIS, DEPARTMENT OF COMPUTER SCIENCE THE UNIVERSITY OF MELBOURNE, November 2003 (2003-11), XP002438048
- **SANTOS, R.: "Emotional Speech Recognition"** DIPLOMA THESIS. TECHNICAL UNIVERSITY OF MADRID, E.T.S.I.T., 2002, XP002438049

## Description

### Background of the invention

#### Field of the invention

The present invention generally relates to the field of automated emotional recognition, and particularly to an emotional recognition system providing reliable and accurate emotional recognition services.

#### Description of the related art

The emotional recognition is a particular application in the artificial intelligence field. One of the aims of emotional recognition is to improve the naturalness of the communication between man and machine and to enhance the efficiency of the communication means. Several researches have been developed on this theme, and the possible applications of emotional recognition are still being investigated in the present days.

Part of said researches have been directed to the definition of different methods adapted to represent and evaluate the emotions. In particular, researches in the psychology field have found that an useful manner for representing the emotions calls for using so-called emotional representation diagrams. As known to those skilled in the art, an emotional representation diagram allows to graphically represent certain quantities from which it is possible to deduce the emotions in some ways. For example, known emotional representation diagrams are those proposed by *Whissel* and *Plutchik*.

Emotional representation diagrams are also illustrated in R. Cowie et al., "Emotion Recognition in Human-Computer Interaction", IEEE SIGNAL PROCESSING MAGAZINE JANUARY 2001, pp. 33-80, and in K. R. Scherer, "What are emotions? And how can they be measured?", Social Science Information, 2005, SAGE Publications, Vol. 44(4), pp. 695-729.

Document EP 1 300 831 discloses a method for detecting emotions from speech input, in which a first feature class and a second feature class are evaluated, derived and/or extracted from a given speech input. From said features and/or from parameters thereof a current emotional state of a current speaker is derived.

In Noam Amir et al. "Classifying emotions in speech: a comparison of methods", UROSPEECH 2001, vol. 1, page 127, are compared the performance of two algorithms, a classification algorithm based on Euclidean distances and a classification algorithm based on the use of neural networks.

Document US 2003/0028383 discloses a system for modeling and simulating emotion states of human emotion responses using data analysis of real-time on non-real-time data.

In Grim et al., "Combining categorical and primitives-based emotion recognition", Proceedings of EUSIPCO 2006, Florence, Italy, are combined two trends in emotion recognition, feature-based categorical classification end primitives-based dynamic emotion estimation.

However, it has to be noted that the passage from a particular emotional representation diagram to a different one may produce significant alterations in the represented emotions. This is due to the fact that the emotions are not represented in a uniform way.

This drawback renders the use of said emotional representation diagrams for performing automated emotional recognitions really disadvantageous. Indeed, the automated emotional recognition is usually carried out by emotional state classifiers, that are adapted to associate to each particular emotion a corresponding state. One fundamental aspect of said approach consists in that each state defined by the emotional state classifier is independent from each other. However, as previously mentioned, the graphical representations of the emotions given by the emotional representation diagrams imply that among the states corresponding to different emotions there are smooth transitions and different degrees of alikeness.

On the other hand, an automated emotional recognition system that makes use of emotional classifiers only, without the possibility of representing the emotions through emotional representation diagrams, can not benefit of all the advantages given by graphical representation of the emotions.

### Summary of the invention

In view of the above, the Applicant has tackled the problem of improving the efficiency of known automated emotional recognition systems.

According to an aspect of the present invention, an automated emotional recognition system as set forth in the appended claim 1 is provided. The emotional recognition system comprises an emotional state classifier adapted to receive, during an operative phase, an input information stream with embedded information related to emotional states of a person, and to generate a succession of emotional state indications derived from said input information stream.

The emotional recognition system further comprises a post-processing function, configured to receive at least two emotional state indications of said succession and, for each of said at least two emotional state indications, determine a corresponding emotional state representation in an emotional state representation system. The post-processing function is further configured to combine the emotional state representations of said at least two emotional state indications to obtain an output emotional state indication.

According to another aspect of the invention, a corresponding method for the automatic emotional recognition of a person as set forth in the appended claim 8 is provided. Brief description of the drawings

The features and advantages of the present invention will be best understood by reading the following detailed description of some embodiments thereof, given merely by way of non-limitative example, that will be conducted making reference to the accompanying drawings, wherein:

Figure 1 schematically shows, in terms of functional blocks, an emotional recognition system according to an embodiment of the present invention.

Figure 2 illustrates a flow chart schematically showing the interactions of an emotional classifier block with the emotional recognition optimizer block of the emotional recognition system of Figure 1, according to an embodiment of the present invention.

Figure 3 schematically illustrates, in terms of functional blocks, the main functional components of the emotional recognition system of Figure 1 for implementing a post-training directed to optimize system parameters, according to an embodiment of the present invention.

Figure 4 schematically illustrates, in terms of functional blocks, the main functional components of the emotional recognition system of Figure 1 for implementing a post-training directed to optimize emotional diagram configuration data, according to an embodiment of the present invention.

Figure 5 illustrates an exemplary Whissel representation diagram.

Figures 6-8 illustrate Whissel representation diagrams that represent emotional states used by the emotional recognition system during the operation, according to an exemplary embodiment of the present invention.

Detailed description of the preferred embodiments

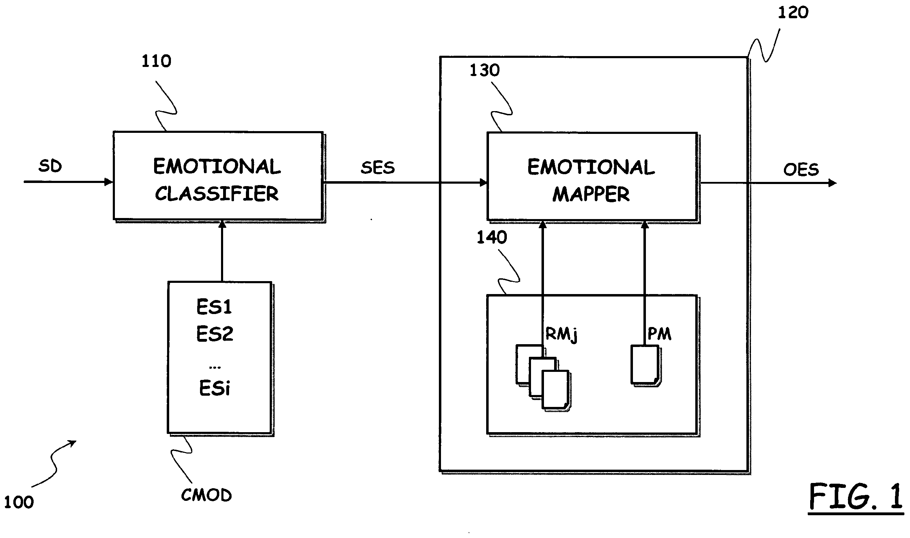

With reference to the drawings, Figure 1 schematically shows, in terms of functional blocks, the main functional components of an automated emotional recognition system 100 according to an embodiment of the present invention, and, in terms of arrows, the data such functional components receive and provide from/to each other.

The emotional recognition system 100 includes an automated emotional state classifier block 110 coupled to an emotional recognition optimizer block 120.

The emotional state classifier block 110 is adapted to receive an information stream SD with embedded information related to emotional states of a person - for example speech data derived from an audio signal generated by transducing a portion (sp in the following) of a speech - for recognizing an emotional state indication SES indicative of the speaker's emotions. For the sake of simplicity, in the following of the present description it is assumed that the information stream SD is represented by speech data, though the invention is not limited to the employment of speech only. Indeed, the emotional recognition system 100 may employ data of different types, even not related to voice, such as images, for performing automatic emotion recognition. The emotional state classifier block 110 may be for example a state classifier, adapted to detect an emotional state among a plurality of emotional states ESi (i=1 to p) that have been classified according to associated emotions. Without entering into details not relevant to the understanding of the present invention, each emotional state ESi is univocally associated with a particular emotion; in the classification it performs, the emotional state classifier block 110 treats the different emotional states ESi to be independent (uncorrelated) from each other. In operation, the emotional state classifier block 110 makes use of a classification model CMOD that has been previously trained using a training database (not shown), for example a vocal database including a plurality of recorded speeches having a predetermined emotional content. In particular, without entering into details known to those skilled in the art, the classification model CMOD provides classification data and rules adapted to reproduce the relationships that have been established (during the model training) between the elements of the training database and corresponding emotional states ESi.

As will be described in detail in the following of the present description, the emotional recognition optimizer block 120 is responsible of processing and interpreting data denoting the emotional state indication SES, generated by the emotional state classifier block 110, for improving the accuracy and the reliability of the emotional recognition operation performed by the emotional recognition system 100. Moreover, as will be made apparent in the following of the present invention, the emotional recognition optimizer block **120** allows personalizing the emotional recognition function so as to conform to different possible contexts/scenarios of use of the emotional recognition system **100.**

The emotional recognition optimizer block **120** includes an emotional mapping block **130** adapted to process the emotional state indication **SES,** provided by the emotional state classifier block **110,** for deriving therefrom a corresponding output emotional state indication **OES** that represents an indication of the emotional state of the speaker that is regarded as more suitable to the use in the context/scenario considered compared to that determined by the emotional state classifier block **110.** More particularly, as will be described in detail in the following of the present description, the emotional recognition optimizer block **120** is adapted to map the emotional state indication **SES** selected by the emotional state classifier block **110** onto a selected emotional representation diagram, and then to use said selected emotional representation diagram as a dominium for performing a new classification of the emotional state indication **SES.**

According to an embodiment of the present invention, the emotional mapping block **130** is coupled to a configuration block **140,** which is adapted to store configuration data that are provided to the emotional mapping block **130** for the configuration thereof depending on the different possible contexts/scenarios of use of the emotional recognition system **100.** According to an embodiment of the present invention, the configuration block **140** is adapted to store a plurality of emotional diagram configuration datasets **RMj** (j=1 to q), each dataset defining coordinates in a corresponding emotional representation diagram *R* that can be used by the emotional mapping block **130** for performing mapping operations on the emotional state indication **SES.** More particularly, according to an embodiment of the present invention, each emotional representation diagram *R* allows to geometrically represent the emotional states **ESi** in a diagrammatic way that makes use of a whichever *n*-dimensional space, and in which to each emotion a distinct set of *n* values is univocally associated. Moreover, the configuration block **140** is adapted to store additional configuration data specifying additional information directed to better characterize the operations that the emotional mapping block **130** has to perform. Said additional configuration data are globally referred to as system parameters **PM.**

The operation of the emotional recognition system **100** will be now described.

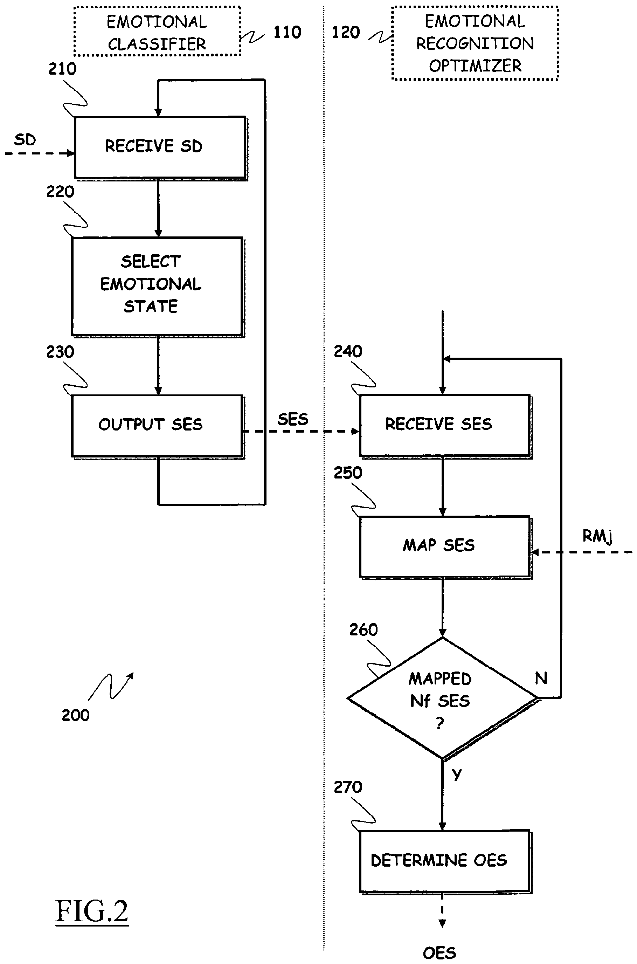

**Figure 2** illustrates a flow chart **200** schematically showing the interactions of the emotional state classifier block **110** with the emotional recognition optimizer block **120** when operating, according to an embodiment of the present invention.

Firstly, every time frame *t*, having for example a time duration of two seconds, the emotional classifier block **110** receives a set of speech data **SD** (block **210**), corresponding to a particular portion *sp* of a speech to be analyzed for emotional recognition.

For each time frame *t* during which a set of speech data **SD** is provided thereto, the emotional state classifier block **110** selects which emotional state **ESi** among the classified emotional states **ESi** is the most representative of the emotion experienced by the speaker (block **220**), and accordingly provides to the emotional recognition optimizer block **120** data denoting the emotional state indication **SES** (block **230**). According to an embodiment of the present invention, the emotional recognition optimizer block **120** is adapted to determine the output emotional state indication **OES** based on the processing of a number *Nf* of emotional state indications **SES** provided by the emotional state classifier block **110** in *Nf* consecutive time frames *t.* According to an embodiment of the present invention, the number *Nf* of emotional state indications **SES** to be processed by the emotional recognition optimizer block **120,** *i.e.* the time window implemented by the emotional recognition optimizer block **120** is one of the system parameters **PM** that can be used for configuring the emotional recognition system **100.**

Therefore, the emotional recognition optimizer block **120** receives the emotional state indication **SES** from the emotional state classifier block **110** (block **240**), and starts to perform mapping operations on the emotional state indication **SES** using a selected emotional representation diagram *R* defined by a selected emotional diagram configuration dataset **RMj** (block **250**).

More particularly, the emotional state indication **SES** is provided to the emotional mapping block **130,** wherein it is subjected to a transformation according to a univocal relationship, which associates to the emotional state indication **SES** an *n*-dimensional coordinate in the selected emotional representation diagram *R.* For example, if the selected emotional representation diagram *R* is a bi-dimensional Cartesian space, the emotional state indication **SES** will be associated with a pair of Cartesian coordinates *(x,y).*

Then, the emotional recognition optimizer block **120** checks whether the emotional mapping block **130** has already mapped a number *Nf* of emotional state indications **SES,** or still has to map further emotional state indications **SES.** In other words, the emotional recognition optimizer block **120** waits for receiving a number *Nf* of successive emotional states

In case the number of emotional state indications **SES** that have been previously mapped by the emotional mapping block **130** is less than *Nf*, the emotional recognition optimizer block **120** receive from the emotional state classifier block **110** a further emotional state indication **SES** (decisional block **260,** exit branch **N**).

When the number of emotional state indications **SES** that have been already received and mapped is equal to *Nf* (decisional block **260,** exit branch **Y**), the emotional mapping block **130** processes all the results of the previous *Nf* mapping, for obtaining the output emotional state indication **OES** (block **270**). In particular, the output emotional state indication **OES** determined by the emotional mapping block **130** by properly processing the *Nf* consecutive emotional states corresponds to a new n-dimensional coordinate in the selected emotional representation diagram *R* which globally represents an optimized version of the set of *Nf* emotional state indications **SES**. The *n*-dimensional coordinate of the output emotional state indication **OES** is obtained through a combination of the *n*-dimensional coordinates of the *Nf* emotional state indications **SES**.

Different kind of combinations of the *n*-dimensional coordinates of the *Nf* selected emotional state indications **SES** are possible, the specific type of combination not being limitative of the present invention.

In order to determine the *n*-dimensional coordinate of the output emotional state indication **OES,** the emotional mapping block **130** may for example implement an algorithm that strictly depend on the emotional representation diagram *R* that has been selected. For example, if the selected emotional representation diagram *R* is an *n*-dimensional Cartesian space, wherein each emotional state is defined by an *n*-dimensional coordinate, the n-dimensional coordinate of the output emotional state indication **OES** may be obtained by calculating an algorithm that makes use of the "minimal distance" from the *Nf* emotional states.

Although the emotional recognition system **100** described in connection with the **Figures 1** and **2** is adapted to receive speech data **SD** for recognizing the emotions of a speaker from which the speech data **SD** have been originated, similar considerations apply in case the emotional state classifier block **110** receives data adapted to identify the emotional state of a person, which data having been generated trough the analysis of his/her posture, facial expression, and the like.

As previously mentioned, the emotional recognition system **100** can be configured depending on different possible contexts of use. This can be achieved by properly setting the configuration data stored in the configuration block **140,** *i.e.*, the emotional diagram configuration datasets **RMj** and the system parameters **PM**. For example, the emotional recognition system **100** may be configured by using a particular emotional representation diagram *R* instead of another, or by changing the number *Nf* of emotional state indications **SES** to be combined for obtaining the output emotional state indication **OES**.

The emotional diagram configuration datasets **RMj** and the system parameters **PM** may in particular be optimized depending on a particular emotional perception that a particular user of the emotional recognition system **100** may wish to recognize, or depending on the reduction of the overall error that can be measured on a post-training database. This can be achieved by detecting errors done by the emotional recognition optimizer block **120,** for example the number of emotions that have been incorrectly recognized, and comparing the output emotional state indication **OES** with desired emotional states (*e.g.* according to the recognition of one or more users), using different emotional diagram configuration datasets **RMj** and system parameters **PM** during the process.

In order to optimize the emotional diagram configuration datasets **RMj** and the system parameters **PM,** the emotional recognition optimizer block **120** is subjected to a "post-training" phase. The post-training phase is intended to be performed after the training of the classification model **CMOD** used in operation by the emotional state classifier block **110**. In particular, as will be described in the following, in order to be effective, the post-training phase makes use of a post-training database **PDB** that has in advance been classified as suitable for the context/scenario of use considered.

The post-training database **PDB** may for example coincide with the training database that has been previously used by the emotional state classifier block **110,** but it is important to underline that the post-training database **PDB** is independent from it, since the post-training phase does not have any influence on the training of the emotional state classifier block **110.**

The post-training phase is directed to optimize both the system parameters **PM** and the emotional diagram configuration datasets **RMj** in order to reduce the occurrence of wrong emotional recognitions. More in particular, the post-training phase may be designed in such a way as to allow achieving two distinct optimizations: one directed to optimize of the system parameters **PM,** and another directed to optimize the emotional diagram configuration datasets **RMj.**

An example of a post-training phase for optimizing the system parameters **PM** - for example, the number *Nf* of emotional state indications **SES** to be combined for obtaining the output emotional state indication **OES** - will be now described in detail.

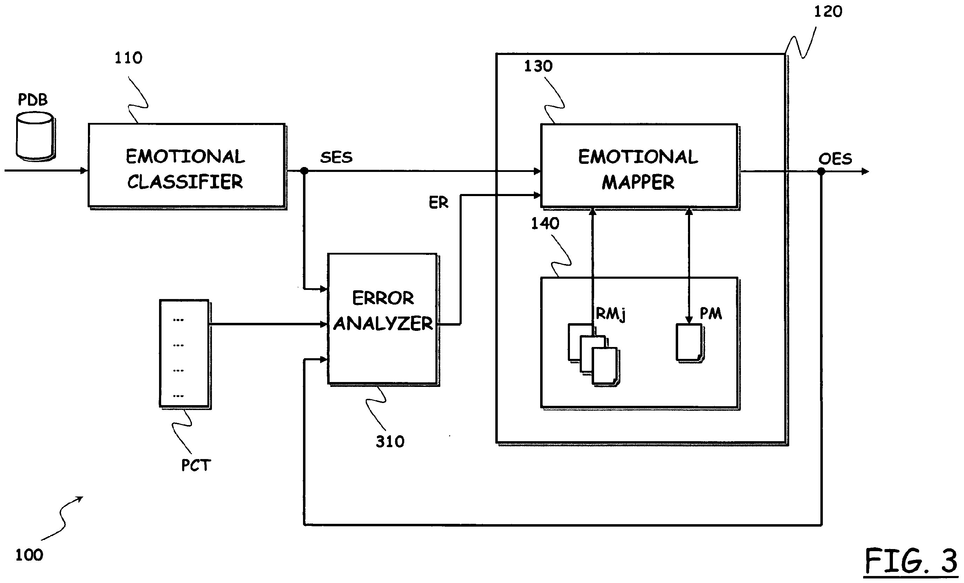

**Figure 3** schematically illustrates, in terms of functional blocks, the main functional components of the emotional recognition system **100** for implementing a post-training directed to optimize the system parameters **PM,** according to an embodiment of the present invention. The elements corresponding to those shown in the **Figure 1** are denoted with the same references, and their explanation is omitted for the sake of brevity.

According to the embodiment of the present invention illustrated in **Figure 3,** the speech data **SD** that is fed to the emotional state classifier block **110** is included in the post-training database **PDB**. In this way, during the post-training phase, the selected emotional state indications **SES** output by the emotional state classifier block **110** are generated depending on the elements of the post-training database **PDB,** instead of being generated in response to a generic speech data that has not been previously classified according to the perception of one or more users.

In order to perform the post-training phase for optimizing the system parameters **PM,** the emotional recognition system **100** further includes an error analyzer block **310**. The error analyzer block **310** is adapted to receive the emotional state indications **SES** selected by and output by the emotional state classifier block **110,** the output emotional state indication **OES** calculated and output by the emotional recognition optimizer block **120** and a post-training classification table **PCT,** which establishes a reference emotional state, determined by one of more users in a previous phase, for each of the elements of the post-training database **PDB.** Depending on these inputs, the error analyzer block **310** is adapted to determine error data **ER** that are indicative of the inaccuracy of the output emotional state indication **OES.** This can be achieved by comparing the reference emotional state defined in the post-training classification table **PCT** with the emotional state indications **SES** and the output emotional state indication **OES.** The error data **ER** generated by the error analyzer block **310** provide useful information on the effective improvement that can be achieved using the emotional recognition optimizer block **120.**

The operation of the emotional recognition system **100** during the post-training directed to optimize the system parameters **PM,** will be now described according to an embodiment of the present invention.

The configuration data stored in the configuration block **140** have an initial value. For example, the values of the system parameters **PM** determine the desired number $Nf$ of emotional state indications **SES** to be processed by the emotional mapping block **130** for obtaining the output emotional state indication **OES.**

Depending on which element of the post-training database **PDB** receives, the emotional state classifier block **110** determines a corresponding emotional state indications **SES.**

The emotional mapping block **130** receives from the emotional state classifier block **110** a number $Nf$ of successive emotional state indications **SES,** and accordingly determines an output emotional state indication **OES,** using a particular emotional representation diagram $R$, as defined by the emotional diagram configuration datasets **RMj** (which are assumed to be kept fixed).

Data indicative of the output emotional state indication **OES** are then provided to the error analyzer block **310,** which accordingly generates the error data set **ER.**

The emotional mapping block **130** receives from the error analyzer block **310** the error data **ER,** which are indicative of the inaccuracy of the calculated output emotional state indication **OES.** Depending on the error data **ER,** the emotional mapping block **130** determines whether the system parameters **PM** used for generating the output emotional state indication **OES** needs to be updated or not, and, in the affirmative case, produces updated, optimized system parameters **PM** intended to replace the initial system parameters. The emotional mapping block **130** can use a wide set of known algorithms for performing the selection of an optimal value for the system parameters. For example, simple iterative method, such as binary search among a maximum and minimum value, or analytic method, such as genetic algorithm or forward selection, can be used to implement the search of a sub-optimal set of system parameters. Said optimization is independent from the emotional state classifier block **110** and makes use of relatively low processing resources compared to those normally employed for training the classification model **CMOD.** This aspect is very relevant because allows to obtain the output emotional state indication **OES** without the need of performing complex operations directed to optimize the behavior of the emotional state classifier block **110.** The emotional mapping block **130** can use the error data **ER** to evaluate the effect of different sets of system parameters **PM,** selecting, after few iterations, an optimal or sub-optimal sets thereof capable of improving the emotional recognition in the scenario of use of the emotional recognition system **100** represented by the post-training database **PDB.**

Updating of the system parameters **PM** may for example involve varying the number $Nf$ of emotional state indications **SES** to be processed.

The values of the updated, optimized system parameters **PM** may be stored into the configuration block **140.**

The post-training operations may be repeated using the updated system parameters **PM,** for example, using a different number $Nf$ of emotional state indications **SES** to be processed by the emotional mapping block **130.** In this way, the emotional mapping block **130** generates a new output emotional state indication **OES** to be provided to the error analyzer block **310.**

In case the emotional mapping block **130,** based on the error data **ER,** determines that the system parameters **PM** used for generating the output emotional state indication **OES** do not need to be updated, the current system parameters **PM** are considered to be already optimized.

The post-training database **PDB** and the post-training classification table **PCT** may be common for all users, or they may be selected by the user. This allows customizing the post-training operations, and consequently the system parameters **PM.** In this way, the emotional recognition system **100** can be trained for recognizing emotional states according to the emotional perceptions of particular users.

The post-training directed to optimize the emotional diagram configuration datasets **RMj** will be now described in detail.

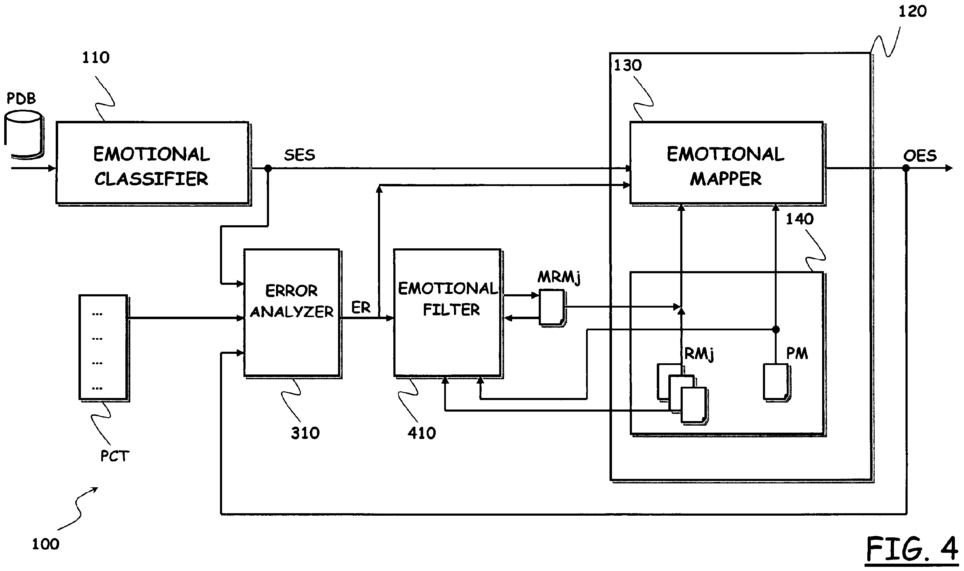

**Figure 4** schematically illustrates, in terms of functional blocks, the main functional components employed by the emotional recognition system **100** during the post-training directed to optimize the emotional diagram configuration datasets **RMj,** according to an embodiment of the present invention. The elements corresponding to those shown in the **Figure 3** are denoted with the same references, and their explanation is omitted for the sake of brevity.

Even in this case, the emotional state classifier block **110** is fed with the elements included in the post-training database **PDB,** and a corresponding post-training classification table **PCT** is fed to an input of the error analyzer block **310**.

In order to perform the post-training phase directed to optimize the emotional diagram configuration datasets **RMj,** the emotional recognition system **100** further includes an emotional filter block **410** connected between the error analyzer block **310** and the emotional mapping block **130**. The emotional filter block **410** is adapted to receive the error data **ER** provided by the error analyzer block **310** and the system parameters **PM** from the configuration block **140**. Moreover, the emotional filter block **410** is adapted to receive the emotional diagram configuration dataset **RMj** corresponding to a particular emotional representation diagram $R$ to be optimized. Depending on said inputs, the emotional filter block **410** is adapted to modify the emotional diagram configuration dataset **RMj** for generating corresponding modified emotional diagram configuration dataset **MRMj** that define a modified version $MR$ of the emotional representation diagram $R$.

The operation of the emotional recognition system **100** during the post-training directed to optimize the emotional diagram configuration datasets **RMj** are similar to those previously described in reference to **Figure 3.**

In particular, the post-training phase starts with the emotional diagram configuration dataset **RMj** stored in the configuration block **140,** which defines a particular emotional representation diagram $R$ to be optimized. The system parameters **PM** may either be set according to default values, or alternatively, they may be the result of a post-training phase that has been previously performed.

Depending on which element of the post-training database **PDB** it receives, the emotional state classifier block **110** determines a corresponding emotional state indication **SES**.

The emotional mapping block **130** receives from the emotional state classifier block **110** data denoting a number $Nf$ of emotional state indications **SES,** and accordingly determines an output emotional state indication **OES** using the emotional representation diagram $R$ to be optimized, defined by the emotional diagram configuration dataset **RMj** presently stored in the configuration block **140**.

Data denoting the output emotional state indication **OES** are then provided to the error analyzer block **310,** which accordingly generates the error data **ER**.

Based on the error data **ER** received from the error analyzer block **310** and on the emotional diagram configuration dataset **RMj,** the emotional filter block **410** generates corresponding modified emotional diagram configuration data **MRMj** defining a modified version $MR$ of the emotional representation diagram $R$. According to an embodiment of the present invention, the emotional filter block **410** may modify the emotional representation diagram $R$ using two different approaches, depending on the degree of optimization desired.

More particularly, the emotional filter block **410** may modify the $n$-dimensional coordinates that identify the emotional states in the emotional representation diagram $R$. This approach is particularly efficient in case the system is to be optimized for a high number of different scenarios of use, and when the emotional recognition system **100** is shared among a large number of users, since it acts on the emotional representation diagram R only, without the need of further trainings of the emotional classifier **110**.

Alternatively, the emotional filter block **410** may vary the number of emotional states used by the emotional mapping block **130** for determining the output emotional state indication **OES**. This second approach allows in particular reducing the number of emotions that can be recognized by the emotional recognition system **100** without the need of training a new emotional state classifier block **110**.

Once the emotional filter block **410** has obtained the modified emotional representation diagram MR, the corresponding modified diagram configuration dataset **MRMj** is provided to the emotional mapping block **130**.

Then, the emotional mapping block **130** re-determines the output emotional state indication **OES** employing the modified emotional representation diagram $MR$ defined by the modified emotional diagram configuration dataset **MRMj.**

This process is repeated until the modified emotional diagram configuration datasets **MRMj** are reputed to define a corresponding modified emotional representation diagram $MR$ sufficiently optimized. In order to establish whether an emotional representation diagram can be regarded as optimized or not, the emotional mapping block **130** may define and exploit a cost function which depends on the error data **ER** provided by the error analyzer block **310** and on the emotional representation diagram used. An optimized modified emotional representation diagram $MR$ will correspond to the emotional representation diagram that minimizes the emotional recognition error according to said cost function.

The modified emotional diagram configuration datasets **MRMj** may be used for updating the emotional diagram configuration datasets **RMj** stored into the configuration block **140**.

Even in this case, the post-training database **PDB** and the post-training classification table **PCT** may be common for all users, or they may be selected by the user. For example, different users may decide to fill the post-training database **PDB** with different speech data **SD**. Moreover, since each user may perceive the emotions in a different way, different post-training classification tables **PCT** may be selected for performing the post-training operations with a same post-training database **PDB**. This allows customizing the post-training operations, and consequently the emotional diagram configuration data **RM**. In this way, the emotional recognition system **100** can be trained for recognizing emotional states according to the emotional perceptions of particular users.

The two post-training phases previously described in reference to the **Figures 3** and **4** are preferably independent from each other, and they may be performed in different time sequence. However, it is preferable to perform the post-training phase directed to optimize the system parameters **PM** first, since, even if the operations performed by the emotional recognition system **100** during said post-training phase may make use of relatively low processing resources, the post-training directed to optimize the system parameters **PM** allows optimizing the emotional recognition system with a high flexibility.

Thanks to the peculiarity of the emotional recognition system **100** proposed, the automated emotional recognition process carried out by the emotional state classifier block **110** can be optimized by the emotional recognition optimizer block **120** with techniques that are independent both from the classification models used for the emotional recognition and from the emotional representation diagrams used for representing them.

The advantages of the proposed emotional recognition system **100** are several, since the emotional recognition errors that can be carried out by the emotional state classifier block **110** can be reduced without having to modify the classification model used by the emotional state classifier block **110**. This reduction of emotional recognition errors is accomplished by the emotional recognition optimizer block **120,** which may take into account both the indications of one or more users (for customizing the interpretation of the emotions) and the results obtained from statistical systems independent from the classification model used by the emotional state classifier block **110**. Moreover, the optimization of the emotional recognition process carried out by the emotional state classifier block **110** can be executed independently from which emotional representation diagram has been chosen for the representation of the emotional states.

In the following of the present description, an example of how the emotional recognition system **100** according to an embodiment of the present invention may be practically employed will be described.

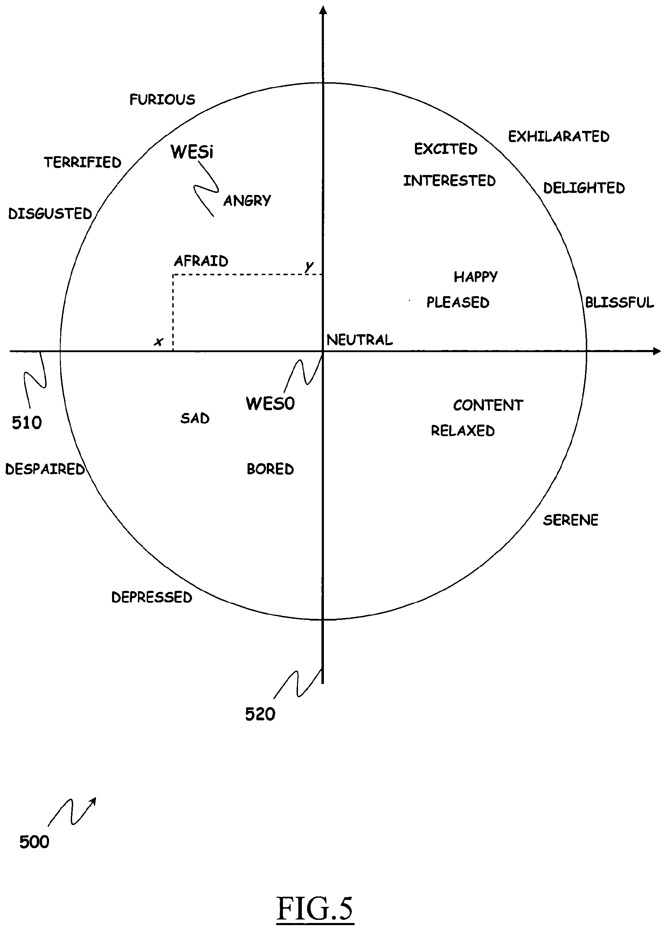

According to this example, the emotional representation diagrams R employed by the emotional recognition system **100** make use of the Whissel representation **500** illustrated in **Figure 5.** As known to those skilled in the art, the Whissel representation **500** - also known as "Whissel 's wheel" - defines the emotions as points of a bi-dimensional space defined by two orthogonal axis; a horizontal axis **510,** known as "evaluation" axis, that is related to the valence of the perception (positive or negative), and a vertical axis **520,** known as "activation" axis, related generally to the energy of the speech signal, that specifies the excitation and emphasis levels of the emotions.

The Whissel representation **500** defines a plurality of p emotional states **WESi** ($i$=0 to $p$-1), each one identifiable by a pair of coordinates *(x,y)* on the axes **510, 520**. In particular, the coordinate *x* refers to the evaluation axis **510,** and the coordinate *y* refers to the activation axis **520**. The point of coordinates ($x$=0,$y$=0)*, i.e.,* the origin of the axes **510, 520,** correspond to a "neutral" emotional state **WES0.**

The collection of the coordinates (**x, y**) of all the p emotional states **WESi** univocally defines a corresponding emotional representation diagram *R*. According to an embodiment of the present invention, data defining said collection of the coordinates (**x,y**) are included in the emotional diagram configuration dataset **RMj** defining the emotional representation diagram R.

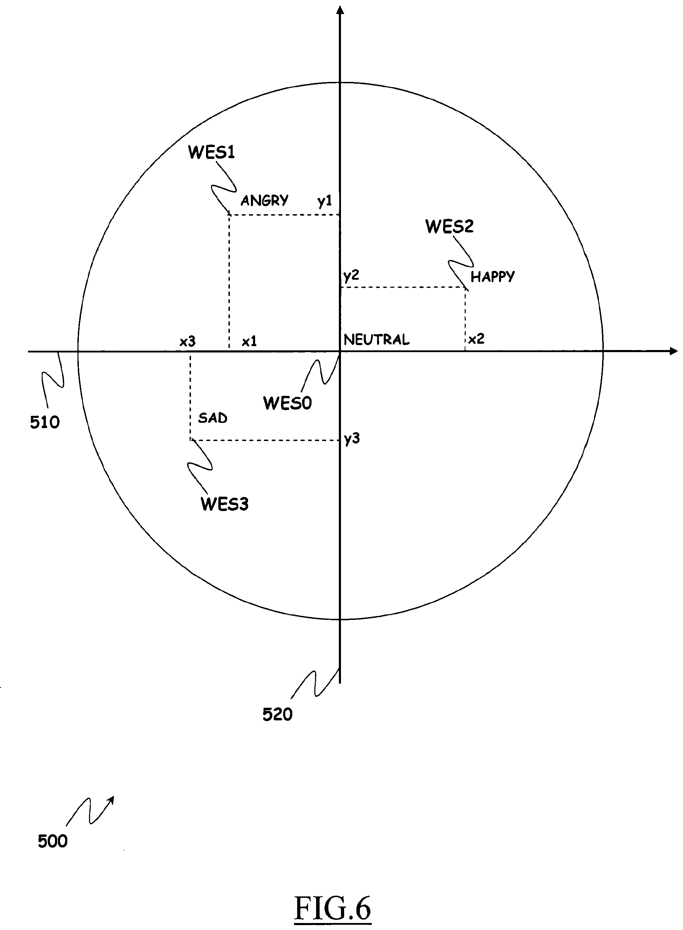

In order to simplify the description of the example herein considered, reference will now be made to a Whissel emotional representation diagram *R*' including four emotional states **WESi** only, as shown in **Figure 6:**

- neutral (corresponding to the emotional state **WES0** having coordinates (**x=x0, y=y0**));

- angry (corresponding to the emotional state **WES1** having coordinates (**x=x1, y=y1**));

- happy (corresponding to the emotional state **WES2** having coordinates (**x=x2, y=y2**));

- sad (corresponding to the emotional state **WES3** having coordinates (**x=x3, y=y3**)).

The data defining the coordinates (**x, y**) of said four emotional states **WESi** are included in a corresponding emotional diagram configuration dataset **RMj'.**

Moreover, according to this example, the system parameters **PM** are set in such a way that the number *Nf* of emotional state indications **SES** to be combined by the emotional mapping block **130** for obtaining the output emotional state indication **OES** is equal to three (*i.e.*, the system works on a time window of three consecutive emotional states).

As previously described, according to an embodiment of the present invention, during the operation of the emotional recognition system **100** the output emotional state indication **OES** is determined by the emotional mapping block **130** in a two-step process. Firstly, the emotional mapping block **130** maps the *Nf* emotional state indications **SES** received from the emotional state classifier block **110** using a particular *n*-dimensional emotional representation diagram *R* - in this example, the Whissel bi-dimensional emotional representation diagram *R'*. Then, once the *Nf* emotional state indications **SES** have been mapped, the output emotional state indication **OES** is obtained trough a combination of the coordinates of the *Nf* emotional state indications **SES** - in this example, a combination of the coordinates (**x, y**). The second step may be performed by the emotional mapping block **130** depending on different algorithms, for example chosen by the designer of the emotional recognition system **100.**

More in particular, according to the example at issue, the coordinates (**x**, **y**) of the *Nf* emotional state indications **SES** that have been mapped are firstly combined for obtaining a pair of combined coordinates (**xc, yc**) which corresponds to a weighted average of the *Nf* coordinates (**x, y**) of the emotional state indications **SES.** Said weighted average is calculated by taking into account the number *ni* of occurrence of each emotional state **WESi** of the Whissel emotional representation diagram *R'* among the *Nf* emotional state indications **SES.** The combined coordinates (**xc, yc**) thus obtained are the following:

$$x_c = \frac{n0 \cdot x0 + n1 \cdot x1 + n2 \cdot x2 + n3 \cdot x3}{Nf};$$

$$y_c = \frac{n0 \cdot y0 + n1 \cdot y1 + n2 \cdot y2 + n3 \cdot y3}{Nf}.$$

If, for example, the *Nf* emotional state indications **SES** provided to the emotional mapping block **130** by the emotional state classifier block **110** correspond to two angry emotional states **WES1** and one neutral emotional state **WES0**, the combined coordinates (**xc, yc**) are the following:

$$x_c = \frac{1 \cdot x0 + 2 \cdot x1}{3};$$

$$y_c = \frac{1 \cdot y0 + 2 \cdot y1}{3}.$$

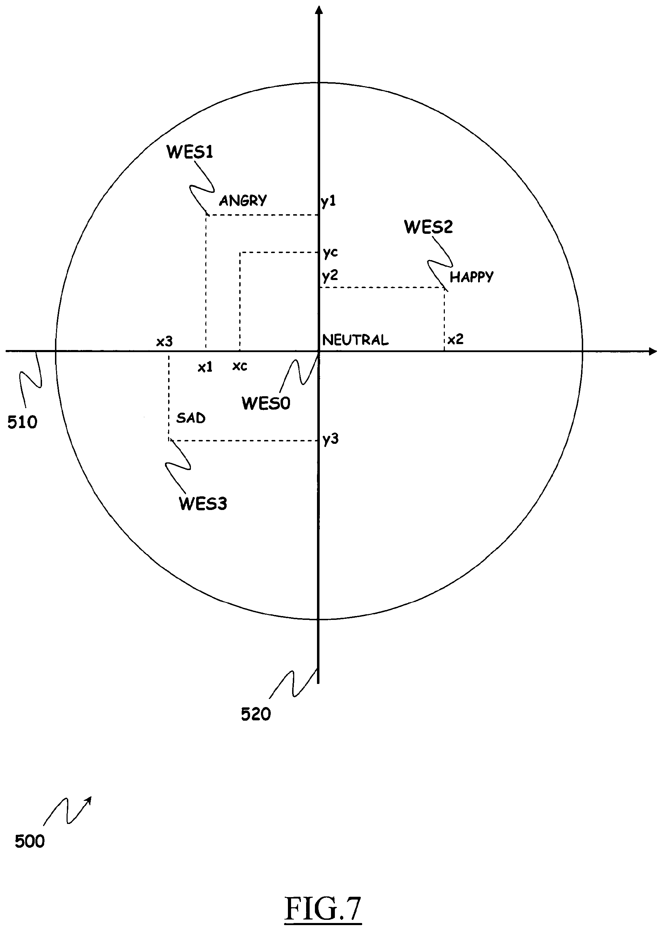

These combined coordinates (**xc, yc**) are depicted in **Figure 7** using the Whissel emotional representation diagram *R'***500**.

This approach allows determining combined coordinates (**xc**, **yc**) that take into account the general emotional course of the speaker during the temporal window defined by the *Nf* emotional state indications **SES** generated by the emotional state classifier block **110.**

Additionally, it is possible to weight the average using further indexes that indicate the accuracy of the emotional state classifier block **110.**

Once the combined coordinates (**xc, yc**) have been obtained, the output emotional state indication **OES** may be determined in different ways.

For example, according to an embodiment of the present invention, the combined coordinates (**xc, yc**) may be directly used for defining the output emotional state indication **OES.** In this case, the output emotional state indication **OES** generally will not coincide with any one of the emotional states defined by the emotional representation diagram.

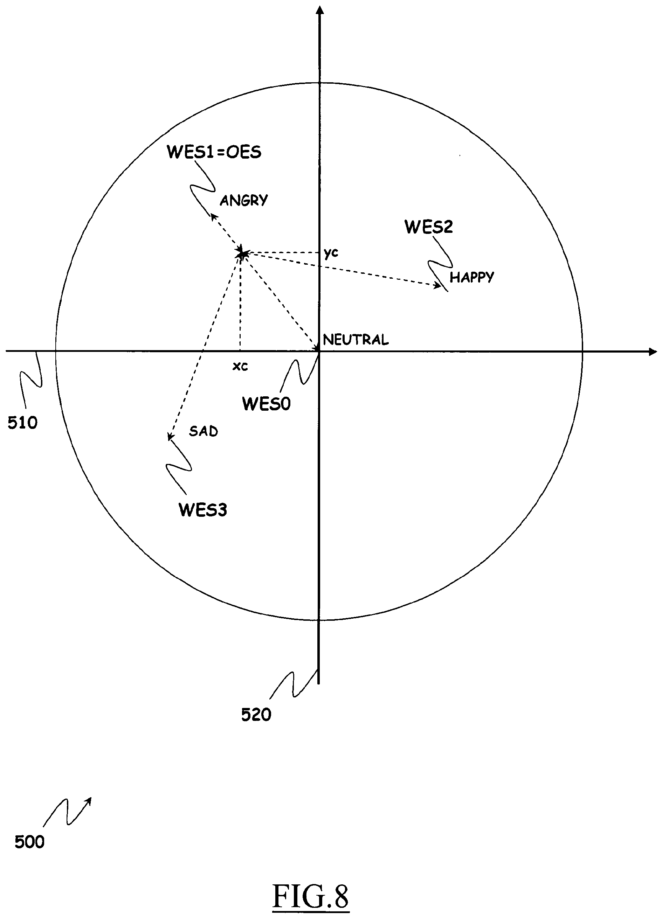

Alternatively, the emotional mapping block **130** may determine which emotional state among those defined by the emotional representation diagram is the "nearest" to the combined coordinates (**xc, yc**). For example, according to the example at issue, the emotional mapping block **130** calculates the emotional state **WESi** having the coordinates (**x=xi**, **y=yi**), that is at the minimum distance from the emotional state defined by the combined coordinates (**xc, yc**). As can be shown in **Figure 8,** in the example at issue, the output emotional state indication **OES** corresponding to the combination of two angry emotional states **WES1** and one neutral happy emotional state **WES0** coincide with the angry emotional state **WES1**

It is clear that when all the received *Nf* emotional state indications **SES** correspond to a same emotion, the resulting output emotional state indication **OES** will coincide to that emotional state indication **SES.**

As previously described, both the emotional diagram configuration datasets **RMj** and the system parameters **PM** may be optimized depending on a particular emotional perception that a particular user of the emotional recognition system **100** may desire to recognize, or depending on the reduction of the whole error that can be measured on a training database. For this purpose, the system recognition system **100** is subjected to the post-training.

Hereinafter, an example is presented of how the post-training phase directed to optimize the emotional diagram configuration dataset **RMj** that define the representation diagrams *R* can be performed by the emotional recognition system **100.**

Even in this example, reference will be made to a representation diagram *R* following the Whissel representation **500** previously described. In order to simplify the description, it is supposed that by said representation diagram *R* only seven different emotional states **WESi** can be defined, and in particular those corresponding to "angry", "bored", "disgusted", "afraid", "blissful", "sad" and "neutral" emotional states.

As previously mentioned, purpose of the post-training directed to optimize the emotional diagram configuration datasets **RMj** consists in modifying the coordinates - in the selected emotional representation diagram $R$ - of the emotional states in order to minimize the emotional recognition error, by using the error data **ER** generated by the error analyzer block **310.**

According to an exemplary embodiment of the present invention, the emotional diagram configuration dataset **RMj,** and thus the corresponding emotional representation diagrams R, can be optimized by analyzing a "confusion matrix" that is associated to the analysis of the output emotional state indication **OES** generated by the emotional recognition optimizer block **120.** Since, as previously explained, the output emotional state indication **OES** is obtained using an emotional representation diagram $R$ defined by an emotional diagram configuration dataset **RMj** there exists a relation of dependency between the confusion matrix and the emotional diagram configuration dataset **RMj.** As known to those skilled in the art, a confusion matrix provides indications regarding the distribution of the recognition error for a determined sequence of emotional states. According to an embodiment of the present invention, the confusion matrix is generated by the error analyzer block **310** using the post-training database **PDB** and the post-training classification table **PCT.** Therefore, the confusion matrix provides indications regarding the recognition errors of the output emotional state indication **OES.**

In a different embodiment of the present invention, a second confusion matrix may be derived from an emotional state indication **SES** for giving initial information even when the emotional diagram configuration dataset **RMj** has not yet been selected, or when the output emotional state indication **OES** has not yet been calculated by the emotional mapping block **130.**

An example of a confusion matrix obtained using the Whissel representation diagram $R$ considered herein may be the following:

|  | Angry | bored | disgusted | Afraid | blissful | sad | neutral |
|---|---|---|---|---|---|---|---|
| **angry** | **80.31** | 0.79 | 3.15 | 3.94 | 8.66 | 0 | 3.15 |
| **bored** | 0 | **66.67** | 6.17 | 2.47 | 0 | 7.41 | 17.28 |
| **disgusted** | 3.15 | 17.39 | **52.17** | 4.35 | 4.35 | 10.87 | 2.17 |
| **afraid** | 10.24 | 4.35 | 5.80 | **40.58** | 4.35 | 10.14 | 15.94 |
| **blissful** | 18.11 | 0 | 4.23 | 5.63 | **52.11** | 0 | 5.63 |
| **sad** | 0 | 11.29 | 0 | 1.61 | 0 | **82.26** | 4.85 |
| **neutral** | 2.36 | 17.71 | 5.06 | 7.59 | 0 | 2.53 | **63.29** |

For the purpose of optimizing the emotional diagram configuration dataset **RMj,** the confusion matrix is generated using the post-training database **PDB** and the post-training classification table **PCT.** Each row of the confusion matrix corresponds to an emotional state **WESi** that has to be recognized according to the indication provided by the post-training classification table **PCT,** while each column of the confusion matrix corresponds to the selection of a particular output emotional state indication **OES.** According to an embodiment of the present invention, the confusion matrix is generated by the error analyzer block **310** and is included in the error data **ER.** Optionally, the second confusion matrix can be generated using the emotional state indication **SES** carried out by the emotional state classifier block **110.** The generic element of the confusion matrix provides the percentage of possibilities that the emotional state classifier block **110** selects the emotional state corresponding to that labeled in the corresponding column, given that the real emotional state is equal to that labeled in the corresponding row. The sums of the percentages provided by all the elements of a row corresponds to a percentage of 100%. It is clear that the values provided by the elements of the main matrix diagonal are the percentage of possibilities corresponding to correct selection performed by the emotional state classifier block **110.**

In this context, the confusion matrix provides very useful information regarding the accuracy of the emotional recognition system **100.** Indeed, the higher the accuracy provided by the emotional recognition system **100,** the higher the values of the percentages provided by the elements of the main diagonal. By observing how said percentages are distributed among the elements of a row, it is possible to quantify the inaccuracy of the emotional recognition system **100.** This information can be expediently used for modifying the emotional diagram configuration datasets **RMj** in such a way as to find the emotional representation diagram $R$ adapted to minimize the emotional recognition error of the system. Thanks to this possibility, it is also possible to pass from a standard way of representing the emotional states to a personalized one by changing the post-training classification table **PCT** for satisfying the subjective emotional perception of one or more users.

A practical use of the confusion matrix for the optimization of the emotional diagram configuration datasets **RMj** provides for the definition of an error function $E(i)$ for each emotional state **WESi,** that provides a quantification of the error in the recognition of the corresponding emotional state **WESi.**

For this purpose, the elements of each row of the confusion matrix are normalized, in such a way that the element corresponding to a generic $i$-th row and to the generic $j$-th column provides the probability $p(i,j)$ that, given an emotional state **WESi,** said emotional state is recognized by the emotional recognition system **100** as the emotional state **WESj.** In case i=j, the corresponding probability $p(i,j)$ represents the probability of a correct emotional recognition.

For each $i$-th row of the confusion matrix, it is:

$$\sum_{j=1}^{N} p(i,j) = 1 \,,$$

wherein $N$ is the number of different emotional states **WESi** provided by the selected emotional representation diagram $R$, and corresponds to both the number of rows and columns of the confusion matrix (in the example at issue, $N$ is equal to 7).

Consequently, an optimal choice for defining the error function $E(i)$ of the recognition of the emotional state **WESi** may be given by the sum of all the probabilities $p(i,j)$ provided in the i-th row minus the probability $p(i,i)$ of a correct emotional recognition of the emotional state **WESi:**

$$E(i) = \sum_{\substack{j=1 \\ j \neq i}}^{N} p(i,j) = 1 - p_{ii} \,.$$

Said error functions $E(i)$ may be combined to each other for defining a global error function $GE$ that characterize the whole emotional recognition system **100.**

For example, the global error function $GE$ can be obtained by calculating the average of the error functions $E(i)$ corresponding to all the $N$ emotional states **WESi** that can be represented with the emotional representation diagram $R$:

$$GE = \frac{1}{N} \sum_{i=1}^{N} E(i) \,.$$

The global error function $GE$ depends on the confusion matrix (or other equivalent data) generated by the Error Analyzer block **310.** As previously explained, the confusion matrix is dependent on the diagram configuration dataset **RMj**; therefore, the global error function $GE$ can be used as an effective relation expressing recognition errors as a set of functions of the diagram configuration dataset **RMj.**

By changing the emotional representation diagram $R$ (which can be achieved changing the emotional diagram configuration dataset **RMj),** and/or by changing the coordinates used in the selected emotional representation diagram $R$ for representing the emotional states **WESi,** it is possible to vary the performance of the emotional recognition system **100,** since the elements of the confusion matrix, and consequently, the corresponding error functions E(i), are accordingly varied.

Thus, an optimum emotional representation diagram $R$ is that whose coordinates are capable of minimizing the above described global error function GE.

A wide set of known algorithms can be used to perform the selection of an optimal value for the diagram configuration dataset **RM.** For instance, methods such as genetic algorithms or forward selections can be used for implementing the search of the sub-optimal set of values for the diagram configuration dataset **RMj.**Naturally, in order to satisfy local and specific requirements, a person skilled in the art may apply to the solution described above many modifications and alterations. Particularly, although the present invention has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a general matter of design choice.

**Claims**

**1.** An automated emotional recognition system (**100**), comprising:

an emotional state classifier (**110**) adapted to receive, during an operative phase, an input information stream (**SD**) with embedded information related to emotional states of a person, and to generate at least two successive emotional state indications (**SES**) derived one from each of different portions of said input information stream; **characterized by** comprising

a post-processing function (**120**) including an emotional state indication mapping function (**130**), configured to:

receive said at least two successive emotional state indications;

for each of said at least two emotional state indications generated by the emotional state classifier, determine a corresponding set of emotional coordinates (**x,y**) in an emotional state representation diagram, establishing a univocal relationship between each emotional state indication and the corresponding set of emotional coordinates; and

combine the sets of emotional coordinates corresponding to the at least two successive emotional state indications, in such a way to determine a set of combined coordinates, in said emotional state representation diagram, corresponding to a combined output emotional state indication (**OES**).

2. The emotional recognition system of claim 1, wherein the emotional state indication mapping function is further adapted to process the combined coordinates in such a way to obtain a set of output coordinates, in said emotional state representation diagram, corresponding to the output emotional state indication, and wherein the output coordinates correspond to the emotional coordinates of the emotional state indication that is at the minimum distance from the combined emotional state in said emotional state representation diagram.

3. The emotional recognition system of any one of the claims from 1 to 2, wherein the post-processing function further includes a configuration function (**140**) adapted to store configuration data, said configuration data including data (**RMj**) defining the coordinates of the emotional state indications in said emotional representation diagram, and wherein the configuration data further includes system parameters (**PM**) defining a number of emotional state indications in the succession of emotional states to be received by the post-processing function to produce the output emotional state indication.

4. The emotional recognition system of claim 3, further including an error analyzer (**310**) adapted to provide an error indication (**ER**) indicative of a degree of inaccuracy of the output emotional state indication during a training phase, different than the operating phase, in which the input information stream fed to the emotional state classifier is predetermined, and wherein the error analyzer is adapted to receive the succession of emotional state indications from the emotional state classifier, the output emotional state indication produced by the emotional post-processing function and a post-training classification table (**PCT**) defining reference emotional state indications related to the predetermined input information stream, the error indication depending on the emotional state indications of the succession, on the output emotional state indication and on the post-training classification table.

5. The emotional recognition system of claim 4, wherein the system parameters are adapted to be set depending on the error indication provided by the error analyzer during the training phase.

6. The emotional recognition system of claim 4 or 5, further including an emotional filter function (**410**) adapted to receive the error indication from the error analyzer during the training phase for varying the data defining the coordinates of the emotional state indications in said emotional representation diagram in such a way to change said coordinates depending on the error indication.

7. The emotional recognition system of any one of the claims from 4 to 6, wherein the post-training classification table is adapted to be varied by an user of the emotional recognition system for changing the reference emotional state indications corresponding to the predetermined input information stream.

8. A method for the automated emotional recognition of the emotional states of a person, comprising the steps of:

during an operative phase:

- receiving (210) an input information stream (SD) with embedded information related to the emotional states of the person;
- generating (220, 230) at least two successive emotional state indications (SES) derived one from each of different portions said input information stream,

**characterized by** further comprising the steps of:

- receiving : (240) said at least two successive emotional state indications;
- for each of said at least two emotional state indications, determining a corresponding set of emotional coordinates (**x,y**) in an emotional state representation diagram, establishing an univocal relationship between each emotional state indication and the corresponding set of emotional coordinates; and
- combining the sets of emotional coordinates corresponding to at least two successive emotional state indications for determining (270) a set of combined coordinates corresponding to a combined output emotional state indication (OES).

9. The method of claim 8, further including the step of processing the combined coordinates for obtaining a set of output coordinates corresponding to the output emotional state indication, wherein the output coordinates correspond to the emotional coordinates of the emotional state indication that is at the minimum distance from the combined emotional state in said emotional state representation diagram.

## Patentansprüche

1. Automatisiertes Emotionserkennungssystem (100), umfassend:

eine Emotionszustands-Klassifizierungseinheit (110), welche dafür geeignet ist, während einer Betriebsphase einen Eingabeinformationsstrom (SD) mit eingebetteten Informationen zu empfangen, die sich auf Emotionszustände einer Person beziehen, und mindestens zwei aufeinander folgende Emotionszustandsanzeigen (SES) zu erzeugen, die von jedem von verschiedenen Teilen des Eingabeinformationsstroms abgeleitet werden;

**dadurch gekennzeichnet, dass** es umfasst:

eine Nachverarbeitungsfunktion (120), welche eine Emotionszustandsanzeige-Abbildungsfunktion (130) umfasst, konfiguriert zum:

Empfangen der mindestens zwei aufeinander folgenden Emotionszustandsanzeigen;
Bestimmen eines entsprechenden Satzes von Emotionskoordinaten (x,y) in einem Emotionszustands-Darstellungsdiagramm für jede der mindestens zwei Emotionszustandsanzeigen, die durch die Emotionszustands-Klassifizierungseinheit erzeugt werden, Einrichten einer eindeutigen Beziehung zwischen jeder Emotionszustandsanzeige und dem entsprechenden Satz von Emotionskoordinaten; und
Kombinieren der Sätze von Emotionskoordinaten, welche den mindestens zwei aufeinander folgenden Emotionszustandsanzeigen entsprechen, in solcher Weise, dass ein Satz kombinierter Koordinaten in dem Emotionszustands-Darstellungsdiagramm bestimmt wird, welche einer kombinierten Ausgabe-Emotionszustandsanzeige (OES) entsprechen.

2. Emotionserkennungssystem nach Anspruch 1, wobei die Emotionszustandsanzeige-Abbildungsfunktion ferner dafür geeignet ist, die kombinierten Koordinaten in solcher Weise zu verarbeiten, dass ein Satz von Ausgabekoordinaten in dem Emotionszustands-Darstellungsdiagramm erhalten wird, welche der Ausgabe-Emotionszustandsanzeige entsprechen, und wobei die Ausgabekoordinaten den Emotionskoordinaten der Emotionszustandsanzeige entsprechen, die in dem Emotionszustands-Darstellungsdiagramm einen minimalen Abstand von dem kombinierten Emotionszustand aufweisen.

3. Emotionserkennungssystem nach einem der Ansprüche 1 bis 2, wobei die Nachverarbeitungsfunktion ferner eine Konfigurationsfunktion (140) umfasst, welche dafür geeignet ist, Konfigurationsdaten zu speichern, wobei die Konfigurationsdaten Daten (RMj) umfassen, welche die Koordinaten der Emotionszustandsanzeigen in dem Emotionszustands-Darstellungsdiagramm definieren, und wobei die Konfigurationsdaten ferner Systemparameter (PM) umfassen, welche eine Anzahl an Emotionszustandsanzeigen in der Folge von Emotionszuständen definieren, die durch die Nachverarbeitungsfunktion zu empfangen sind, um die Ausgabe-Emotionszustandsanzeige zu erzeugen.

4. Emotionserkennungssystem nach Anspruch 3, ferner umfassend eine Fehleranalyseeinheit (310), welche dafür geeignet ist, eine Fehleranzeige (ER) bereitzustellen, die ein Maß an Ungenauigkeit der Ausgabe-Emotionszustandsanzeige während einer sich von der Betriebsphase unterscheidenden Trainingsphase anzeigt, in welcher der Eingabe-Informationsstrom vorbestimmt wird, der der Emotionszustands-Klassifizierungseinheit zugeführt wird, und wobei die Fehleranalyseeinheit dafür geeignet ist, die Folge von Emotionszustandseinheiten von der Emotionszustands-Klassifizierungseinheit, die durch die Emotions-Nachverarbeitungsfunktion erzeugte Ausgabe-Emotionszustandsanzeige und eine Nach-Training-Klassifizierungstabelle (PCT) zu empfangen, welche Referenz-Emotionszustandsanzeigen definiert, die sich auf den vorgegebenen Eingabe-Informationsstrom beziehen, wobei die Fehleranzeige von den Emotionszustandsanzeigen der Folge, von der Ausgabe-Emotionszustandsanzeige und von der Nach-Training-Klassifizierungstabelle abhängt.

**5.** Emotionserkennungssystem nach Anspruch 4, wobei die Systemparameter dafür geeignet sind, in Abhängig von der Fehleranzeige eingestellt zu werden, die von der Fehleranalyseeinheit während der Trainingsphase bereitgestellt wird.

**6.** Emotionserkennungssystem nach Anspruch 4 oder 5, welches ferner eine Emotionsfilterfunktion (410) umfasst, die dafür geeignet ist, während der Trainingsphase die Fehleranzeige von der Fehleranalyseeinheit zu empfangen, um die Daten, welche die Koordinaten der Emotionszustandsanzeigen in dem Emotionsdarstellungsdiagramm definieren, in solcher Weise zu variieren, dass die Koordinaten in Abhängigkeit von der Fehleranzeige geändert werden.

**7.** Emotionserkennungssystem nach einem der Ansprüche 4 bis 6, wobei die Nach-Training-Klassifizierungstabelle dafür geeignet ist, durch einen Benutzer des Emotionserkennungssystems variiert zu werden, um die Referenz-Emotionszustandsanzeigen entsprechend dem vorgegebenen Eingabeinformationsstrom zu ändern.

**8.** Verfahren zur automatischen Emotionserkennung der Emotionszustände einer Person, umfassend die Schritte:

während einer Betriebsphase:

- Empfangen (210) eines Eingabeinformationsstroms (SD) mit eingebetteten Informationen, die sich auf die Emotionszustände der Person beziehen;
- Erzeugen (220, 230) von mindestens zwei aufeinander folgenden Emotionszustandsanzeigen (SES), die von jedem von verschiedenen Teilen des Eingabeinformationsstroms abgeleitet werden;

**dadurch gekennzeichnet, dass** es ferner die Schritte umfasst:

- Empfangen (240) der mindestens zwei aufeinander folgenden Emotionszustandsanzeigen;
- Bestimmen eines entsprechenden Satzes von Emotionskoordinaten (x,y) in einem Emotionszustands-Darstellungsdiagramm für jede der mindestens zwei Emotionszustandsanzeigen, Einrichten einer eindeutigen Beziehung zwischen jeder Emotionszustandsanzeige und dem entsprechenden Satz von Emotionskoordinaten; und
- Kombinieren der Sätze von Emotionskoordinaten, welche mindestens zwei aufeinander folgenden Emotionszustandsanzeigen entsprechen, zum Bestimmen (270) eines Satzes kombinierter Koordinaten, welche einer kombinierten Ausgabe-Emotionszustandsanzeige (OES) entsprechen.

**9.** Verfahren nach Anspruch 8, ferner umfassend den Schritt des Verarbeitens der kombinierten Koordinaten zum Erhalten eines Satzes von Ausgabekoordinaten, welche der Ausgabe-Emotionszustandsanzeige entsprechen, wobei die Ausgabekoordinaten den Emotionskoordinaten der Emotionszustandsanzeige entsprechen, die in dem Emotionszustands-Darstellungsdiagramm einen minimalen Abstand von dem kombinierten Emotionszustand aufweisen.

**Revendications**

**1.** Système de reconnaissance d'émotions automatisée (100) comprenant :

un classificateur d'états émotionnels (110) adapté pour recevoir, pendant une phase opérationnelle, un flux d'informations d'entrée (SD) comportant des informations enfouies associées aux états émotionnels d'une personne, et pour générer au moins deux indications d'état émotionnel (SES) successives dérivées chacune des différentes parties dudit flux d'informations d'entrée ;
**caractérisé en ce qu'**il comprend
une fonction de post-traitement (120) comportant une fonction de mappage de l'indication d'état émotionnel (130) configurée de façon à :

recevoir lesdites au moins deux indications d'état émotionnel successives ;

déterminer, pour chacune desdites au moins deux indications d'état émotionnel générées par le classificateur d'états émotionnels, un ensemble correspondant de coordonnées émotionnelles (x, y) dans un diagramme de représentation de l'état émotionnel, en établissant une relation univoque entre chaque indication d'état émotionnel et l'ensemble de coordonnées émotionnelles correspondant ; et

combiner les ensembles de coordonnées émotionnelles correspondant aux au moins deux indications d'état émotionnel successives, de façon à déterminer un ensemble de coordonnées combinées, dans ledit diagramme de représentation d'état émotionnel qui correspond à une indication d'état émotionnel de sortie (OES) combinée.

2. Système de reconnaissance d'émotions selon la revendication 1, dans lequel la fonction de mappage de l'indication d'état émotionnel est outre adaptée pour traiter les coordonnées combinées de façon à obtenir un ensemble de cordonnées de sortie, dans ledit diagramme de représentation d'état émotionnel, qui correspond à l'indication d'état émotionnel de sortie, et dans lequel les coordonnées de sortie correspondent aux coordonnées émotionnelles de l'indication d'état émotionnel qui se trouve à la distance minimum de l'état émotionnel combiné dans ledit diagramme de représentation d'état émotionnel.

3. Système de reconnaissance d'émotions selon l'une quelconque des revendications 1 ou 2, dans lequel la fonction de post-traitement comporte en outre une fonction de configuration (140) adaptée pour stocker des données de configuration, lesdites données de configuration comprenant des données (RMj) qui définissent les coordonnées des indications d'état émotionnel dans ledit diagramme de représentation d'état émotionnel, et dans lequel les données de configuration comprennent en outre des paramètres de système (PM) qui définissent un certain nombre d'indications d'état émotionnel dans la succession d'états émotionnels qui doivent être reçus par la fonction de post-traitement afin d'obtenir l'indication d'état émotionnel de sortie.

4. Système de reconnaissance d'émotions selon la revendication 3, qui comprend en outre un analyseur d'erreurs (310) adapté pour fournir une indication d'erreur (ER) indiquant un certain degré d'inexactitude de l'indication d'état émotionnel de sortie pendant une phase d'apprentissage, différente de la phase de fonctionnement, dans laquelle le flux d'informations d'entrée qui alimente le classificateur d'états émotionnels est prédéterminé, et dans lequel l'analyseur d'erreurs est adapté pour recevoir la succession d'indications d'état émotionnel provenant du classificateur d'états émotionnels, l'indication d'état émotionnel de sortie obtenue grâce à la fonction de post-traitement d'état émotionnel et un tableau de classification post-apprentissage (PCT) qui définit les indications d'état émotionnel de référence associées au flux d'informations d'entrée prédéterminé, l'indication d'erreur dépendant des indications d'état émotionnel de la succession, de l'indication d'état émotionnel de sortie et du tableau de classification post-apprentissage.

5. Système de reconnaissance d'émotions selon la revendication 4, dans lequel les paramètres du système sont adaptés pour être définis en fonction de l'indication d'erreur fournie par l'analyseur d'erreurs au cours de la phase d'apprentissage.

6. Système de reconnaissance d'émotions selon la revendication 4 ou 5, qui comprend en outre une fonction de filtrage émotionnel (410) adaptée pour recevoir l'indication d'erreur provenant de l'analyseur d'erreurs au cours de la phase d'apprentissage afin de faire varier les données qui définissent les coordonnées des indications d'état émotionnel dans ledit diagramme de représentation d'état émotionnel de façon à modifier lesdites coordonnées en fonction de l'indication d'erreur.

7. Système de reconnaissance d'émotions selon l'une quelconque des revendications 4 à 6, dans lequel le tableau de classification post-apprentissage est adapté pour être modifié par un utilisateur du système de reconnaissance émotionnelle afin de modifier les indications d'état émotionnel de référence qui correspondent au flux d'informations d'entrée prédéterminé.

8. Procédé de reconnaissance d'émotions automatisée des états émotionnels d'une personne, qui comprend les étapes consistant à :

au cours d'une phase opérationnelle :

- recevoir (210) un flux d'informations d'entrée (SD) comportant des informations enfouies associées aux états émotionnels de la personne ;

- générer (220, 230) au moins deux indications d'état émotionnel successives (SES) dérivées chacune des différentes parties dudit flux d'informations d'entrée,

**caractérisé en ce qu'**il comprend en outre les étapes consistant à :

- recevoir (240) lesdites au moins deux indications d'état émotionnel successives ;
- déterminer, pour chacune desdites au moins deux indications d'état émotionnel successives, un ensemble correspondant de coordonnées émotionnelles (x, y) dans un diagramme de représentation d'état émotionnel, en établissant une relation univoque entre chaque indication d'état émotionnel et l'ensemble de coordonnées émotionnelles correspondant ; et
- combiner les ensembles de coordonnées émotionnelles qui correspondent à au moins deux indications d'état émotionnel successives afin de déterminer (270) un ensemble de coordonnées combinées qui correspondent à une indication d'état émotionnel de sortie (OES) combiné.

9. Procédé selon la revendication 8, comportant en outre l'étape consistant à traiter les coordonnées combinées afin d'obtenir un ensemble de coordonnées de sortie qui correspond à l'indication d'état émotionnel de sortie, dans lequel les coordonnées de sortie correspondent aux coordonnées émotionnelles de l'indication d'état émotionnel qui se trouve à la distance minimum de l'état émotionnel combiné dans ledit diagramme de représentation d'état émotionnel.

EP 2 115 737 B1

FIG. 1

FIG.2

FIG. 3

_FIG. 4_

FIG.5

FIG.6

FIG.7

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1300831 A

- US 20030028383 A

### Non-patent literature cited in the description

- **R. COWIE et al.** Emotion Recognition in Human-Computer Interaction. *IEEE SIGNAL PROCESSING MAGAZINE,* January 2001, 33-80
- What are emotions? And how can they be measured?. **K. R. SCHERER.** Social Science Information. SAGE Publications, 2005, vol. 44, 695-729

- **NOAM AMIR et al.** Classifying emotions in speech: a comparison of methods. *UROSPEECH,* 2001, vol. 1, 127
- **GRIM et al.** Combining categorical and primitives-based emotion recognition. *Proceedings of EUSIPCO,* 2006